(19) Europäisches Patentamt
European Patent Office
Office européen des brevets

(11) **EP 4 685 457 A1**

(12) **EUROPEAN PATENT APPLICATION**
published in accordance with Art. 153(4) EPC

(43) Date of publication:
**28.01.2026 Bulletin 2026/05**

(21) Application number: **23935445.9**

(22) Date of filing: **05.12.2023**

(51) International Patent Classification (IPC):
**G01N 3/24** (2006.01)      **G01N 17/00** (2006.01)

(52) Cooperative Patent Classification (CPC):
**G01N 3/24; G01N 17/00**

(86) International application number:
**PCT/JP2023/043466**

(87) International publication number:
**WO 2024/224674 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2023 JP 2023072153**

(71) Applicant: **JFE Steel Corporation
Tokyo, 100-0011 (JP)**

(72) Inventors:
• **MATSUKI, Yuichi
Tokyo 100-0011 (JP)**
• **NAKAGAWA, Kinya
Tokyo 100-0011 (JP)**
• **SHINMIYA, Toyohisa
Tokyo 100-0011 (JP)**

(74) Representative: **Grünecker Patent- und Rechtsanwälte
PartG mbB
Leopoldstraße 4
80802 München (DE)**

(54) **DELAYED FRACTURE CHARACTERISTIC EVALUATION METHOD, DELAYED FRACTURE PREDICTION METHOD, PROGRAM, AND PRESS-MOLDED ARTICLE PRODUCTION METHOD**

(57)      Provided is a technology for evaluating the influence of a strain amount in a post-trimmed portion before trim forming, on a delayed fracture characteristic of a sheared end surface. A delayed fracture characteristic evaluation method for evaluating a delayed fracture characteristic of a sheared end surface of a metal sheet (3) made of a high-tensile steel sheet includes: producing a test piece (1) having the sheared end surface from the metal sheet (3) having at least a portion to which a plastic strain is applied by performing shearing on the metal sheet at a position including the portion to which the plastic strain is applied; leaving the test piece (1) under a hydrogen charging environment with a load stress being applied to the sheared end surface of the test piece (1); and evaluating the delayed fracture characteristic of the sheared end surface.

FIG. 1

| FIRST STEP | ~10A |
| APPLY PLASTIC STRAIN | |

| SECOND STEP | ~10B |
| SHEARING STEP | |

| THIRD STEP | ~10C |

| FOURTH STEP | ~10D |
| APPLY EXTERNAL STRESS | |

| FIFTH STEP | ~10E |
| LEFT UNDER HYDROGEN CHARGING ENVIRONMENT | |

| SIXTH STEP | ~10F |
| EVALUATION | |

## Description

Technical Field

The present invention relates to a technology suitable for evaluation of delayed fracture on a sheared end surface of a press-formed article produced from a metal sheet made of a high-tensile steel sheet, and a technology using the evaluation technology. In the present specification, the high-tensile steel sheet refers to a steel sheet having a tensile strength equal to or more than 980 MPa.

Background Art

Presently, automobiles are required to be improved in fuel efficiency by reduction in weight and in collision safety. In order to balance a reduction in weight of a vehicle body and protection of an occupant at the time of collision, a high-tensile steel sheet tends to be used for a component constituting the vehicle body. In recent years, a super high-tensile steel sheet having a tensile strength equal to or more than 1470 MPa has been also applied to vehicle bodies. One of the problems at the time when a high-tensile steel sheet is applied to a vehicle body is delayed fracture. Particularly, delayed fracture caused from an end surface after shearing is a principal problem for a high-tensile steel sheet having a tensile strength equal to or more than 980 MPa. Note that the end surface after shearing is also referred to as a sheared end surface. It is known that a large tensile stress remains on this sheared end surface. On this account, the occurrence of delayed fracture on the sheared end surface is concerned.

PTL 1 discloses a method, for example, as a method for evaluating delayed fracture on a sheared end surface. In the method of PTL 1, a test piece to which stress is applied is immersed with hydrogen and hydrogen embrittlement of the sheet steel is evaluated.

PTL 2 discloses a method for evaluating a delayed fracture characteristic of a test piece by applying stress to the test piece. The test piece is acquired by partially cutting out a compressed side from a test piece produced by deep drawing.

Citation List

Patent Literature

PTL 1: JP 5196926 B
PTL 2: JP 2022-14784 A

Summary of Invention

Technical Problem

Here, a sheared end surface of an automobile component includes two types of sheared end surfaces, i.e., a pre-trimmed portion and a post-trimmed portion. The pre-trimmed portion is a portion sheared before press forming. The post-trimmed portion is a portion sheared after press forming.

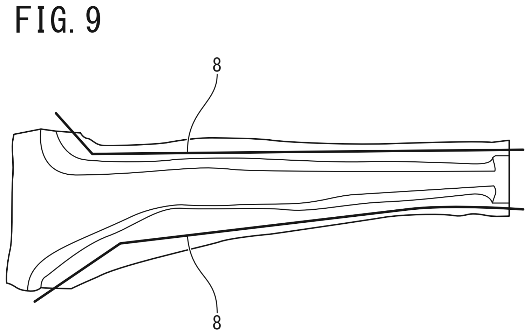

The post-trimmed portion is formed in a case where a sheet presser is required at the time of drawing, for example. In this case, for example, after press forming, an unnecessary flange portion for drawing is subjected to shearing (post-trimming) along a product outline (see reference sign 8 in FIG. 9).

In the case of such post-trimming, a sheared end surface is formed by performing shearing on a portion already having a plastic strain due to forming.

The inventors of the present invention found the following fact that such a post-trimmed portion might have different characteristics as a sheared end surface from a pre-trimmed portion obtained by shearing a metal sheet before pressing which metal sheet does not have a plastic strain.

However, a conventional method as disclosed in PTL 1 does not particularly focus on the evaluation of the sheared end surface of such a post-trimmed portion.

In addition, PTL 2 is intended to evaluate delayed fracture by introducing a compressive strain into a sheared end surface already formed. In terms of this, the present invention is intended to evaluate a sheared end surface newly formed in a portion already having a strain, and therefore, the present invention is also different from PTL 2 in contents of operation.

In consideration of production processes of an actual press-formed article, particularly, a mass-produced automobile component, a delayed fracture evaluation for such a post-trimmed portion is very important. The present invention is achieved in view of such circumstances, and an object of the present invention is to provide a technology that can evaluate an influence of a strain amount of a post-trimmed portion before trim-forming on a delay fracture characteristic of a sheared end surface.

Solution to Problem

An aspect of the present invention is to evaluate delayed fracture to be caused from a sheared end surface of a formed article made of a high-tensile steel sheet. The aspect of the present invention is to provide a technology to evaluate delayed fracture in consideration of a plastic strain amount in a post-trimmed portion before shearing, which has not been considered in the related art. Hereby, the aspect of the present invention is intended to provide a press-formed article excellent in delayed fracture resistance in the production of a formed article having a post-trimmed portion.

In order to achieve the above object, one aspect of the present invention provides a delayed fracture characteristic evaluation method for evaluating a delayed fracture characteristic of a sheared end surface of a metal sheet made of a high-tensile steel sheet. The delayed fracture characteristic evaluation method includes: producing a test piece having the sheared end surface from the metal sheet by applying a plastic strain to at least a portion of the metal sheet and performing shearing on the metal sheet at a position including the portion to which the plastic strain is applied; after the producing of the test piece, leaving the test piece under a hydrogen charging environment with a load stress being applied to the sheared end surface of the test piece; and evaluating the delayed fracture characteristic of the sheared end surface relative to the plastic strain.

Advantageous Effects of Invention

With the aspect of the present invention, it is possible to evaluate the delayed fracture characteristic of a sheared end surface which delayed fracture characteristic corresponds to a plastic strain applied before shearing is performed to form the sheared end surface. Accordingly, with the aspect of the present invention, it is possible to evaluate the influence of a strain amount in a post-trimmed portion before trim forming, on the delayed fracture characteristic of the sheared end surface.

As a result, with the aspect of the present invention, it is possible to further improve the delayed fracture characteristic at the time when a high-tensile steel sheet is applied to various components such as a panel component, a structure, and a frame component of an automobile, for example.

Brief Description of Drawings

FIG. 1 is a view to describe a processing flow of a delayed fracture characteristic evaluation according to an embodiment of the present invention;
FIG. 2 is a view to describe an example in which a plastic strain is applied by tensile deformation in a short axis;
FIG. 3 is a view to describe an example in which a plastic strain is applied by compressive deformation in a short axis;
FIG. 4 is a view to describe an exemplary process of a program according to the embodiment of the present invention;
FIG. 5 is a view to describe an example in which a plastic strain is applied by tensile deformation in Example;
FIG. 6 is a view to describe an example in which a plastic strain is applied by compressive deformation in Example;
FIG. 7 is a view illustrating an example of a delayed fracture limiting line relative to a tensile strain in Example;
FIG. 8 is a view illustrating an example of a delayed fracture limiting line relative to a compressive strain in Example;
FIG. 9 is a top view illustrating a press-formed article in Example;
FIG. 10 is a view in which information in Table 3 is reflected on FIG. 7;
FIG. 11 is a view in which information in Table 3 is reflected on FIG. 8;
FIG. 12 is a view in which information in Table 4 is reflected on FIG. 7; and
FIG. 13 is a view in which information in Table 4 is reflected on FIG. 8.

Description of Embodiments

Next will be described embodiments of the invention with reference to the drawings.

(Outline)

First described is the outline of the present embodiment.
The present embodiment focuses on a strain amount of a trimmed portion before trim forming and introduces a plastic strain into a portion in which a sheared end surface of a test piece is to be formed. The plastic strain to be introduced is introduced by tension or compression as uniaxial deformation relative to an extending direction of the sheared end surface to be formed, for example. Then, the test piece having a plastic strain is subjected to shearing to form the sheared end surface.

After that, a stress is applied to the sheared end surface thus formed by shearing a plastic-strain portion. Then, the test piece to which a stress is applied is put under a hydrogen charging environment, and a load-stress limit value (hereinafter, a delayed fracture critical stress) that causes no delayed fracture is determined.

From the test, a combination of a strain amount (a plastic strain amount) of tensile or compression before shearing and a load-stress limit value that causes no delayed fracture after shearing can be acquired. Based on information on the combination, correlation information on a correlation between the plastic strain amount before shearing and the load-stress limit value is found. The correlation information should be information in a well-known form such as a function or a tabular form, for example.

Furthermore, with reference to the correlation information, CAE analysis information on a press-formed article is determined to predict whether delayed fracture is to occur in the current press-formed article. Based on this prediction, the press-formed article is designed so that no delayed fracture occurs. Hereby, a press-formed article excellent in delayed fracture resistance can be produced. This process should be constructed as a program. In the meantime, an acceptable load-stress limit value may be found based on a plastic strain amount and the correlation information. The plastic strain amount is a plastic strain amount applied until shearing is performed on an end surface of a target press-formed article. In this case, a press-formed article may be determined by a CAE analysis so that a load stress (forming stress) of press forming is equal to or lower than the load-stress limit value thus found. In the present specification, the forming stress is a load stress applied to the sheared end surface after shearing. The forming stress is a stress remaining in a target press-formed article in a state where the target press-formed article is in use.

Next will be described an example of the present embodiment with reference to the drawings.

(Delayed Fracture Characteristic Evaluation Method)

The present embodiment provides a delayed fracture characteristic evaluation method for evaluating a delayed fracture characteristic of a sheared end surface of a metal sheet. The present invention is more effective particularly in a case where the metal sheet is a high-tensile steel sheet.

In the present embodiment, a delayed fracture characteristic evaluation process for a metal sheet targeted for evaluation includes a test step of performing an actual experiment, and an evaluation step.

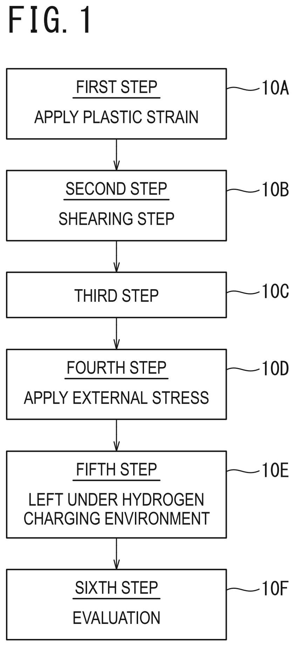

More specifically, as illustrated in FIG. 1, the delayed fracture characteristic evaluation method of the present embodiment includes a first step 10A to a sixth step 10F. The first step 10A to the fifth step 10E correspond to the test step. The sixth step 10F corresponds to the evaluation step.

<First Step 10A>

A metal sheet 3 having the same condition as the metal sheet targeted for evaluation is prepared.

The first step 10A is a step of applying a plastic strain to a region of at least part of the metal sheet 3. It is preferable that the metal sheet 3 to be used herein be a metal sheet that is the same as the metal sheet targeted for evaluation in terms of material and thickness.

It is preferable that a plastic strain be applied to a whole region to become a sheared end surface of a test piece 1 (described later). In addition, it is preferable that a plastic strain be applied by tension or compression as uniaxial deformation.

The first step 10A is a step of introducing a plastic strain into a portion of the metal sheet 3 in which portion a sheared end surface of the test piece 1 is to be formed, for example. More specifically, the first step 10A is a step of introducing a plastic strain by tension or compression as uniaxial deformation in an extending direction of the sheared end surface to be formed. That is, a tensile or compressive direction in which a plastic strain is introduced is a direction along the extending direction of the sheared end surface. Hereby, a generally uniform plastic strain is introducible into the sheared end surface of the test piece 1, along the extending direction of the sheared end surface. The extending direction of the sheared end surface is a linear shape, for example.

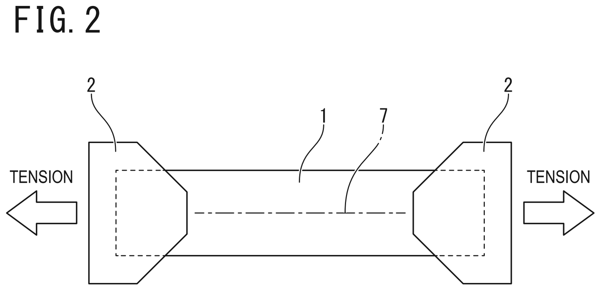

An example of such a method is a method for applying a plastic strain by tensile deformation, as described below. That is, as illustrated in FIG. 2, there is such a method in which the opposite ends of a metal sheet (the test piece 1) having a short-strip shape are caught by a chuck 2 to deform the metal sheet by tension.

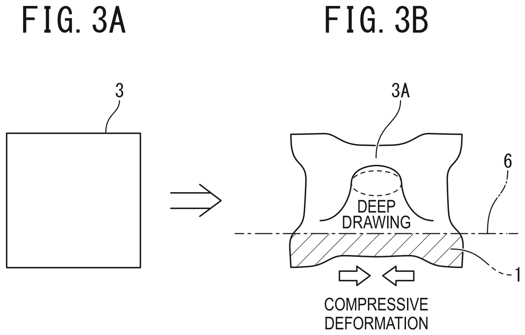

As a method for applying a plastic strain by compressive deformation, there is a method described below. That is, like FIG. 3, deep drawing is performed on the metal sheet 3 to form a drawn component 3A. The deep drawing is performed to deform a flange portion of the drawn component 3A by compression. The flange portion of the drawn component 3A thus produced is a region usable as the test piece 1.

At the time of the plastic deformation, an increase or a decrease in thickness corresponding to a plastic strain amount by tension or compression as uniaxial deformation or a change in width of a layout line drawn on the metal sheet 3 in advance is measured. Alternatively, a measured value of a strain meter or a strain gauge attached to the metal sheet 3 in advance is measured. It is desirable that plastic deformation to be given be adjusted while a strain amount to be introduced into a region of the test piece 1 which region becomes a sheared end surface is measured referring to the measurement of the measured value.

Note that the plastic strain amount to be applied is equal to or more than 0.001, for example.

Here, as the first step 10A, it is assumed that a plastic strain is applied by bending deformation. However, the bending deformation can be considered as a combination of tension on the outside of the bend and compression on the inside the bend. Accordingly, from the viewpoint that the plastic strain thus applied is easily evaluable, tensile deformation or compressive deformation as uniaxial deformation is more easy and preferable to apply a plastic strain. Note that, unlike uniaxial deformation, bending deformation curves a metal sheet and may cause some trouble in a subsequent shearing step.

<Second Step 10B>

The second step 10B is a step of producing the test piece 1 from the metal sheet 3 to which a plastic strain is applied. That is, in the second step 10B, the metal sheet 3 is sheared to form a sheared end surface of the test piece 1 such that the sheared end surface includes a region of the metal sheet 3 to which region the plastic strain is applied.

Here, when the width of a cut-off side at the time of shearing is too short, there is such a concern that a plastic deformation region of the sheared end surface decreases and the delayed fracture characteristic improves. Note that the width of the cut-off side at the time of shearing is also referred to as a cutting allowance. Accordingly, it is desirable that the cutting allowance be at least equal to or more than twice the thickness of the metal sheet 3 to become the test piece 1.

For example, in the case of a metal sheet (the test piece 1 (see FIG. 2)) to which a plastic strain is applied by tensile deformation, the metal sheet is sheared at a position indicated by reference sign 7 by laser cutting or the like to form the test piece 1 in a short-strip shape.

In the case of the metal sheet 3 (see FIG. 3A) with a flange portion subjected to compressive deformation by drawing, the test piece 1 is obtained by cutting as follows. That is, a compressive deformation portion in a region (a shaded portion) of the flange portion of the drawn component 3A is cut out into a short-strip shape at a position indicated by reference sign 6 by laser cutting or the like, and hereby, the test piece 1 is obtained.

<Third Step 10C>

In the test piece 1 formed by shearing a plastic-strain portion targeted for evaluation, an end surface other than the sheared end surface is referred to as a non-sheared end surface portion.

In the third step 10C, it is determined whether or not the non-sheared end surface portion is relatively less damaged and more excellent in delayed fracture characteristic than the sheared end surface such as a ground end surface or a laser end surface.

This is to avoid portions other than an evaluation end surface from fracturing after a period of time and becoming unevaluable in a delayed fracture test in a subsequent step. If there is any problem, the test piece 1 is subjected to additional processing such as cutting as needed. Alternatively, the test piece 1 is newly produced.

<Fourth Step 10D>

The fourth step 10D is a step of applying an external load stress set in advance to the sheared end surface formed by shearing the plastic-strain portion and restraining the sheared end surface in the stress-applied state. The stress is applied by applying a tensile stress or a bending stress, for example. In this case, a method for applying a bending stress by use of a jig is particularly desirable from the viewpoint of convenience. A well-known method should be employed as the method for applying a bending stress.

The method for applying a bending stress may be a method for applying a stress to a test piece having a sheared end surface by four-point bending, for example. It is desirable to adjust the stress by a strain gauge attached to the metal sheet in advance. A load applied by axial tension is also usable. Here, a plurality of test pieces can be prepared by changing a load stress by a sufficiently small span of 100 MPa or the like, for example.

<Fifth Step 10E>

In the fifth step 10E, the test piece 1 restrained in a state where an external load stress is applied thereto in the fourth step 10D is left under a predetermined hydrogen charging environment for a predetermined time. In the fifth step 10E, the occurrence of fracture in the test piece 1 in that state is evaluated.

At this time, it is preferable that the hydrogen charging environment and the leaving time be determined based on conditions that achieve a hydrogen charging amount equivalent to a hydrogen amount estimated to enter a material targeted for evaluation under an environment under which the material is actually used.

The test piece 1 is left under the hydrogen charging environment such that the test piece 1 is immersed in a bathtub in which acid liquid such as hydrochloric acid or $NH_4SCN$ aqueous solution is stored, for example. The concentration of the acid liquid and the immersion time are determined to satisfy a condition under which a predetermined hydrogen amount as an allowable upper limit enters the test piece 1.

The test pieces 1 prepared in the first step 10A and the second step 10B are repeatedly subjected to the third step 10C to the fifth step 10E. At this time, these steps are repeatedly executed while the conditions of the plastic strain to be applied and the load stress to be applied are changed. By selecting a plurality of application levels of the external load stress, it is possible to determine a load-stress limit value that causes no delayed fracture, for each plastic strain amount. The load-stress limit value is also referred to as a delayed fracture critical stress.

<Sixth Step 10F>

In the sixth step 10F, data on a plurality of combinations of the plastic strain amounts applied in the first step 10A with the load-stress limit values that cause no delayed fracture, found in the fifth step 10E, is acquired. With reference to the data on the plurality of combinations, correlation information on a correlation between the plastic strain amount before shearing and a corresponding load-stress limit value is found. Note that, as the plastic strain amount, a strain amount by compressive deformation is distinguished from a strain amount by tensile deformation.

The correlation information should be found by a well-known computing method. The correlation information is, for example, a multiple regression model, a model equation by machine learning, or the like. The data on the plurality of combinations may be employed as the correlation information.

By finding the correlation information in advance, it is possible to predict whether or not delayed fracture occurs in an actual press-formed article or a press-formed article shape to be formed.

More specifically, in the sixth step 10F, with reference to the correlation information, it is predicted whether or not delayed fracture occurs due to a strain amount before trimming and a load stress after trimming. Note that the load stress is a residual stress at the time when press forming is performed on the metal sheet 3, for example. In this case, the residual stress as the load stress is a forming stress. Alternatively, the load stress may be a load stress after trimming, including an assembly stress of a resultant press-formed component in addition to a residual stress (a forming stress) at the time when press forming is performed on the metal sheet 3. In this case, a load stress after trimming is a forming stress.

On the other hand, in a case where an upper limit of the load stress after the sheared end surface is formed (after post-trimming) is determined, it is possible to evaluate a strain amount before trimming which strain amount is a limit to which post-trimming is applicable.

As described above, a component shape or a post-trimming step should be designed not to cause delayed fracture, by determining in advance the risk of delayed fracture in a post-trimmed portion. In this case, with the configuration of the present invention, it is possible to manufacture a press-formed article having a sheared end surface excellent in delayed fracture resistance.

Here, a plastic strain amount of each portion in a press-formed article by tension or compression before trimming, a residual stress of forming, or the like can be calculated by a normal forming analysis by CAE. In a case where a plurality of portions of the sheared end surface has different plastic strain amounts before trimming, the evaluation should be performed as follows. That is, whether or not delayed fracture occurs should be evaluated based on a plastic strain amount of each of the plurality of portions or a representative portion among them as a variable.

(Press-Formed Article Production Method)

In a case where a press-formed article having a sheared end surface formed by shearing at a position including a portion to which a plastic strain is applied is produced, the press-formed article should be produced as follows.

That is, a condition of a load stress after shearing which condition is evaluated not to cause delayed fracture in a press-formed article is determined by the delayed fracture characteristic evaluation method of the present embodiment. Then, the press-formed article is produced under a forming condition that satisfies the determined condition of the load stress.

Alternatively, an allowable limit value of the plastic strain amount before shearing at the time when a target press-formed article is produced is found by the delayed fracture characteristic evaluation method of the present embodiment. Then, a plastic strain to be applied to the metal sheet 3 before shearing is adjusted to be equal to or lower than the limit value of the plastic strain amount.

In the present embodiment, in a case where shearing (post-trimming) is performed after press forming, the plastic strain is adjusted as follows, for example. That is, the strain amount applied to a region to become a sheared end surface in press forming is adjusted to be equal to or lower than the limit value of the plastic strain amount. In this case, the external load stress is a residual stress caused by press forming further performed after shearing, for example. The external load stress is also an assembly stress to be caused at the time when a press-formed component is assembled to other structures, for example.

(Program)

The following describes an example of a program to be used for the above-mentioned delayed fracture characteristic evaluation method.

The program in this example causes a storage unit 40 to store correlation information 40A on a correlation between a plastic strain amount before shearing and an external load-stress limit value (a delayed fracture critical stress) applicable to the sheared end surface. The correlation information 40A should be found by the process of the afore-mentioned delayed fracture characteristic evaluation method. The program in this example is a program for executing a process of finding, with reference to the correlation information 40A, a load-stress limit value applicable after shearing which load-stress limit value corresponds to an input plastic strain amount before shearing.

Another example of the program is a program causing a computer to execute a first processing step and a second processing step. The first processing step is a step of executing a process of finding, with reference to the correlation information 40A, a load-stress limit value corresponding to an input plastic strain amount before shearing. The second processing step is a step of executing a process of determining whether or not delayed fracture occurs, based on a forming stress as a load stress caused at the time when press forming is performed on the metal sheet 3 into a press-formed article shape and the load-stress limit value found in the first processing step.

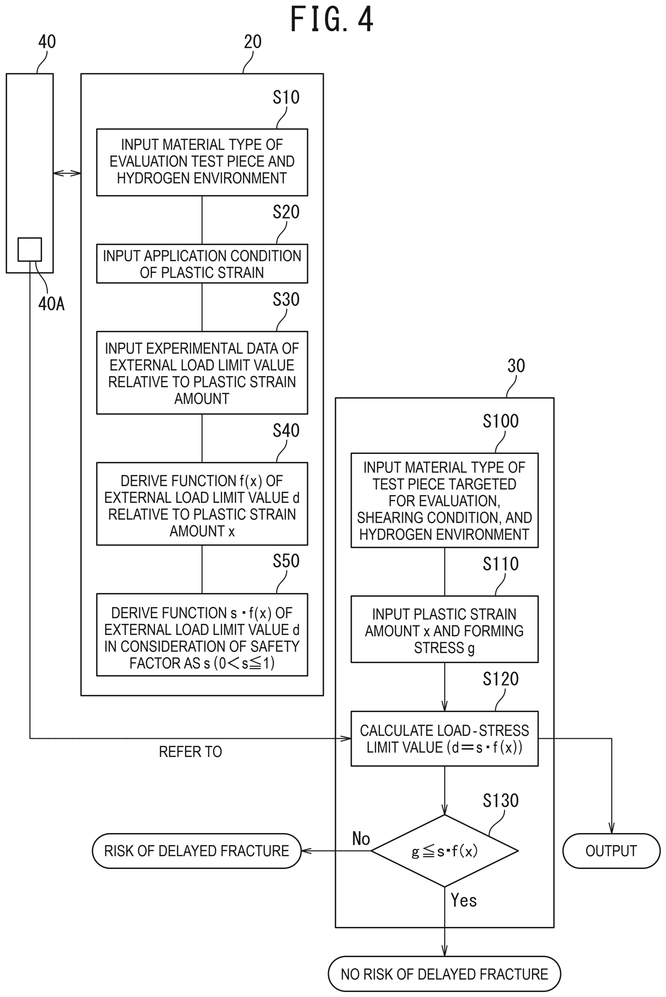

Next will be described an exemplary process executed by the afore-mentioned program of the evaluation method, with reference to FIG. 4. By performing evaluation by the process illustrated in FIG. 4, it is possible to more effectively evaluate delayed fracture.

In the example illustrated in FIG. 4, a correlation information calculating unit 20, an evaluation main unit 30, and the storage unit 40 are provided. Respective programs for executing respective processes of the correlation information calculating unit 20 and the evaluation main unit 30 are stored in the storage unit 40 such as a RAM or a ROM of the computer and executed by the computer.

<Storage Unit 40>

The storage unit 40 includes a recording medium such as a database.

The test from the first step 10A to the fifth step 10E is repeated while a material condition of the metal sheet 3, a condition of the hydrogen environment, a shearing condition, and a forming strain amount are changed variously. By this process, data on a load stress d found for a plastic strain with a testing condition being taken as a variable is found for each material condition of the metal sheet 3, each condition of the hydrogen environment, and each plastic strain amount before shearing. The data thus found is stored in the storage unit 40. Besides, the correlation information 40A found as above is also stored in the storage unit 40. The correlation information 40A may be stored in the same medium as a storage area of the programs.

<Correlation Information Calculating Unit 20>

First, in step S10, the correlation information calculating unit 20 urges input of a condition of the type (steel grade and thickness) of a material, and a condition of a hydrogen environment (acid degree and leaving time) as a condition of delayed fracture, as a basic condition of evaluation. After that, the correlation information calculating unit 20 acquires the input in response to an input operation by an operator.

Subsequently, in step S20, the correlation information calculating unit 20 urges input of a condition of application of a plastic strain before shearing and acquires the input in response to an input operation by the operator.

Subsequently, in step S30, a data aggregate of load stresses corresponding to respective plastic strain amounts and satisfying the conditions input in step S10 and step 20 is acquired from the storage unit 40. The data aggregate is a group of pieces of data (plastic strain amounts before shearing, load stresses).

Alternatively, the correlation information calculating unit 20 urges input of a data aggregate of load stresses corresponding to respective plastic strain amounts found by the test and acquires input information in response to an input operation by the operator. The acquired data is stored in the storage unit 40.

Subsequently, in step S40, the correlation information calculating unit 20 refers to the data aggregate of load stresses corresponding to respective plastic strain amounts, acquired in step S30, and executes a correlation detection process based on a well-known processing equation. More specifically, in step S40, the correlation information calculating unit 20 executes arithmetic processing to find a load stress d as a function f(x) with a plastic strain amount x as a variable.

Subsequently, in step S50, the function of the load stress d, found in step S40, is transformed into an equation in consideration of a safety factor s (: 0 < s ≤ 1) as follows.

$$d = s \cdot f(x)$$

Then, information (the correlation information 40A) on the function of the load stress d is stored in the storage unit 40 with a testing condition as a key.

<Evaluation Main Unit 30>

First, in step S100, the evaluation main unit 30 urges input of a condition of the type (steel grade and thickness) of a material, and a condition of a hydrogen environment (acid degree and leaving time) as a condition of delayed fracture in terms of an evaluation target. The evaluation main unit 30 acquires the input in response to an input operation by the operator.

Subsequently, in step S110, the evaluation main unit 30 urges input of a plastic strain amount x to be applied, before shearing, to a region to become a sheared end surface, and a load stress g to be applied to the metal sheet 3 after the sheared end surface is formed. The evaluation main unit 30 acquires the input in response to an input operation by the operator. The evaluation main unit 30 may acquire these pieces of information from analysis information acquired by CAE analysis.

In step S120, the evaluation main unit 30 acquires, from the storage unit 40, the correlation information 40A including the function "s·f(x)" for the load stress d satisfying the conditions input in step S100. Then, a load-stress limit value d corresponding to the input plastic strain amount x is found. A process of outputting the load-stress limit value d may be executed.

In step S130, the load-stress limit value d (= s·f(x)) found in step S120 is compared with the load stress g applied to the metal sheet 3 after the sheared end surface is formed. Then, the evaluation main unit 30 determines whether or not there is a risk of delayed fracture, based on the comparison. The load stress g is a forming stress, for example.

Here, in step S130 in FIG. 4, the evaluation main unit 30 determines whether or not there is a risk of delayed fracture, but the present invention is not limited to this. A margin (= d - g) of the load stress to delayed fracture may be output in addition.

In the above description, the correlation information calculating unit 20 finds d = f(x) or d = s·f(x) with the plastic strain amount x being as a variable, as the correlation information 40A. Alternatively, as the correlation information 40A, a critical plastic strain amount x = h(d) may be found with the load stress d being as a variable. In this case, in step S120, with reference to the correlation information 40A, the correlation information calculating unit 20 finds the critical plastic strain amount x corresponding to the load stress d to be applied after the sheared end surface is formed. Then, in step S130, the plastic strain amount to be applied, before shearing, to the region to become a sheared end surface is compared with the critical plastic strain amount x thus found. Then, the evaluation main unit 30 determines whether or not there is a risk of delayed fracture, based on the comparison.

(Effects)

In the present embodiment, it is possible to set a critical stress for delayed fracture or determine whether delayed fracture occurs or not, in consideration of the plastic strain amount in a post-trimmed portion of the press-formed article. As a result, in the present embodiment, it is possible to improve the delayed fracture characteristic at the time when a high-tensile steel sheet is applied to various components such as a panel component, a structure, and a frame component of an automobile, for example.

(Others)

This disclosure can also take the following configurations.

(1) Disclosure 1 is a delayed fracture characteristic evaluation method for evaluating a delayed fracture characteristic of a sheared end surface of a metal sheet made of a high-tensile steel sheet, and the delayed fracture characteristic evaluation method includes: producing a test piece having the sheared end surface from the metal sheet by applying a plastic strain to at least a portion of the metal sheet and performing shearing on the metal sheet at a position including the portion to which the plastic strain is applied; after the producing of the test piece, leaving the test piece under a hydrogen charging environment with a load stress being applied to the sheared end surface of the test piece; and

evaluating the delayed fracture characteristic of the sheared end surface relative to the plastic strain.

(2) In Disclosure 2, the test piece includes a plurality of test pieces to which different plastic strains are applied before the shearing, and the delayed fracture characteristic of the metal sheet is evaluated for each of the different plastic strains.

(3) In Disclosure 3, the delayed fracture characteristic evaluation method further includes finding, for a plastic strain amount before the shearing, a load-stress limit value under the hydrogen charging environment which load-stress limit value causes no delayed fracture on the sheared end surface after the shearing, and the delayed fracture characteristic of the sheared end surface is evaluated based on the found load-stress limit value.

(4) In Disclosure 4, the delayed fracture characteristic evaluation method further includes: finding, in advance, a correlation between the plastic strain amount before the shearing and the load-stress limit value; and evaluating an allowable load stress relative to the plastic strain applied to the sheared end surface before the shearing based on the correlation.

(5) Disclosure 5 is a delayed fracture prediction method for predicting whether or not delayed fracture occurs in a press-formed article produced by shearing a pressed component having at least a portion to which a plastic strain is applied, at a position including the portion to which the plastic strain is applied, and the delayed fracture prediction method includes: finding, in advance, a correlation between a plastic strain amount before the shearing and a load-stress limit value in terms of the metal sheet based on the delayed fracture characteristic evaluation method of this disclosure; and predicting whether or not delayed fracture occurs in the press-formed article, based on the correlation.

(6) Disclosure 6 is a program causing: a storage unit to store correlation information on a correlation between a plastic strain amount before shearing and a load-stress limit value which correlation is found based on the delayed fracture characteristic evaluation method of this disclosure; and a computer to execute a process of finding, with reference to the correlation information thus stored, a load-stress limit value applicable after shearing which load-stress limit value corresponds to an input plastic strain amount before shearing.

(7) Disclosure 7 is a program for predicting whether or not delayed fracture occurs in a press-formed article produced by shearing a pressed component having at least a portion to which a plastic strain is applied, at a position including the portion to which the plastic strain is applied, and the program causes: a storage unit to store correlation information on a correlation between a plastic strain amount before shearing and a load-stress limit value which correlation is found based on the delayed fracture characteristic evaluation method of this disclosure; and a computer to execute a first processing step of finding, with reference to the correlation information thus stored, a load-stress limit value corresponding to an input plastic strain amount before shearing, and a second processing step of determining whether or not delayed fracture occurs, based on a forming stress as a load stress applied, after the shearing, to a sheared end surface formed by the shearing performed on the pressed component and the load-stress limit value found in the first processing step.

(8) Disclosure 8 is a press-formed article producing method for producing a press-formed article having a sheared end surface formed by shearing at a position including a portion to which a plastic strain is applied, and the press-formed article producing method includes: determining a condition of a load stress evaluated to cause no delayed fracture in the press-formed article, by the delayed fracture characteristic evaluation method of this disclosure; and producing the press-formed article under a forming condition that satisfies the determined condition of the load stress.

Examples

Next will be described Examples based on the present embodiment.

In Examples, a metal sheet targeted for evaluation is a sample A made of steel having a thickness of 1.4 mm and a strength of 1470 MPa. However, the present invention is not limited to such a metal sheet. The present invention is preferably applicable to a metal material such as a high tensile material having a tensile strength equal to or more than 980 MPa that is highly likely to cause delayed fracture on a sheared end surface.

(Application of Strain)

First, a plastic strain was introduced into a portion of the sample A in which portion a sheared end surface was to be formed, by tension or compression as uniaxial deformation in an extending direction of the sheared end surface to be formed.

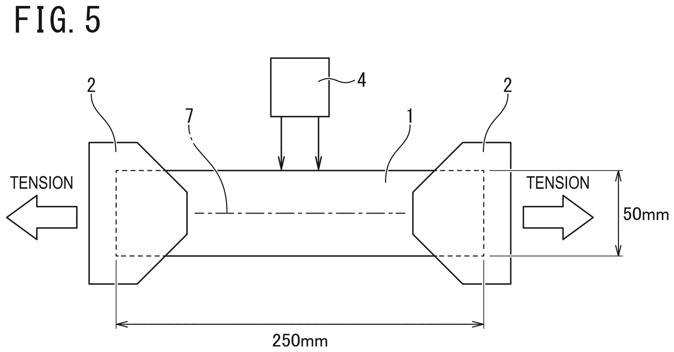

As a method for introducing a plastic strain, in a case of tensile deformation, the test piece 1 (the sample A) having a short-strip shape was caught by the chuck 2 and deformed by tension as illustrated in FIG. 5. At this time, the strain meter 4 was attached to the test piece 1 (the sample A) to measure a tensile deformation amount. A plastic strain amount was adjusted by subtracting an elastic deformation amount from a deformation amount. Note that an outer peripheral end surface of the test piece 1 (the sample A) was cut as a cutting end surface in advance.

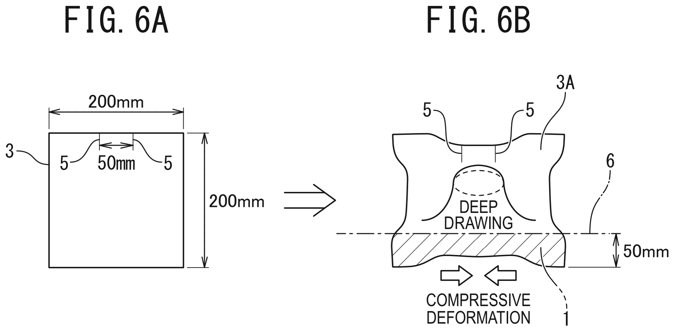

In a case of compressive deformation, first, drawing was performed on the metal sheet 3 (the sample A) to produce a drawn component 3A, as illustrated in FIG. 6. At this time, the drawing was adjusted to deform part of a flange portion of the drawn component 3A by compression. As illustrated FIG. 6A, a layout line 5 was drawn on a compressive deformation portion in advance. A plastic strain amount was estimated from a change in width of the layout line before and after the compressive deformation.

Here, as a punch for deep drawing, a ball head punch with a diameter of 50 mm or the like can be used, for example. In the deep drawing, it is desirable that a sheet presser be placed not to cause wrinkles around the punch.

(Shearing)

A flange portion (a compressive deformation portion) of the metal sheet 3 (the sample A) deformed by compression was cut off by cutting. Then, the compressive deformation portion was cut into a short-strip shape by cutting. Reference sign 6 in FIG. 6 indicates a position of the cutting.

In the meantime, shearing was performed on the test piece 1 (the sample A) deformed by compression as illustrated in FIG. 5. More specifically, a long side of the test piece 1 (the sample A) was subjected to post-trimming by a die for flat shearing, so that the test piece 1 had a short-strip shape. Reference sign 7 in FIG. 5 indicates a shear position.

Here, a clearance at the time of the shearing was 12% relative to an initial thickness before deformation. The shearing was performed such that a portion to be deformed by tension or compression came to the center of a cutout line. A cutting allowance at the shearing was 10 mm, which was at least twice as large as the thickness.

A plurality of test pieces 1 was produced with a tensile plastic strain being changed in a range equal to or more than 0 but equal to or less than 0.03 and a compressive plastic strain being changed in a range equal to or more than 0 but equal to or less than 0.30.

(Application of Load Stress)

After that, a tensile stress was applied to a sheared end surface of each test piece 1 by four-point bending with a cutout section side of the shearing being as the outside of the bend. A load stress at this time was adjusted as follows. That is, the load stress was adjusted such that a strain gauge was attached to the surface of the test piece 1 in advance before the four-point bending and the load stress was calculated by multiplying a strain amount of the strain gauge by 205 GPa as Young's modulus.

In the present example, a plurality of samples was prepared by changing the load stress by 100 MPa from 100 MPa to 1400 MPa for respective plastic strains.

(Leaving Under Hydrogen Charging Environment)

After that, each test piece 1 was immersed in hydrochloric acid of pH 2.5 for 96 h. Then, whether or not the sheared end surface of each test piece 1 had cracks after the immersion test was investigated to find whether or not delayed fracture occurred.

(Results)

Test results are shown in Table 1 and Table 2.

In Table 1 and Table 2, plastic strain amounts introduced into the test pieces 1 before the shearing are described on the left fields. Respective load-stress limit values that did not cause delayed fracture are described on the right fields to correspond to the plastic strain amounts.

Table 1 shows a case where the plastic strain is a tensile plastic strain. Table 2 shows a case where the plastic strain is a compressive plastic strain.

[Table 1]

| Tensile plastic strain | Critical stress |
| --- | --- |
| 0.000 | 1200 |
| 0.005 | 1200 |
| 0.010 | 1100 |
| 0.015 | 1100 |
| 0.020 | 900 |
| 0.025 | 900 |

(continued)

| Tensile plastic strain | Critical stress |
|---|---|
| 0.030 | 900 |

[Table 2]

| Compressive plastic strain | Critical stress |
|---|---|
| 0.00 | 1200 |
| 0.05 | 800 |
| 0.10 | 800 |
| 0.15 | 600 |
| 0.20 | 400 |
| 0.25 | 400 |
| 0.30 | 300 |

From the test results, a relationship between the plastic strain amount before shearing and the delayed fracture critical stress of a sheared end surface after post-trimming (after shearing) was found.

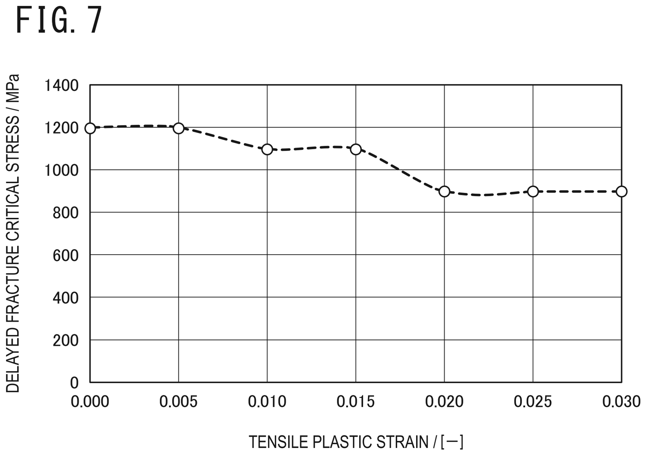

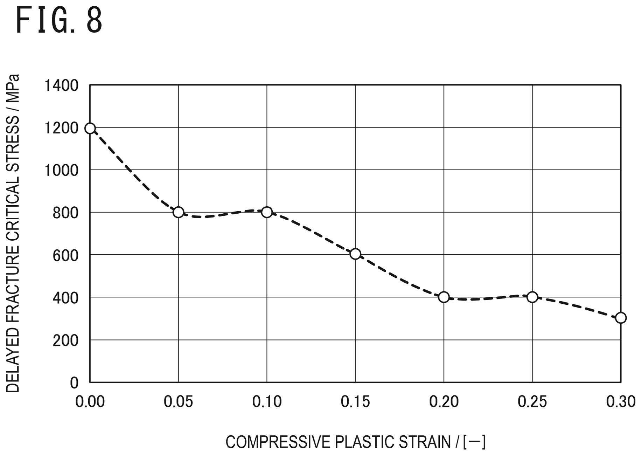

FIG. 7 is a view of correlation information 40A in the case where the plastic strain is a tensile plastic strain, based on Table 1. FIG. 8 is a view of correlation information 40A in the case where the plastic strain is a compressive plastic strain, based on Table 2. FIGS. 7, 8 illustrate limit lines each acquired by plotting with a plastic strain amount before shearing being on the horizontal axis, and a delayed fracture critical stress of a sheared end surface after post-trimming being on the vertical axis. In a region below the limit line, it is predicted that no delayed fracture occurs. Note that, in FIGS. 7, 8, an example of the limit line is indicated by a broken line.

Subsequently, delayed fracture in a post-trimmed portion of a press-formed article was predicted by use of the limit lines thus found, and measures were taken.

In this example, the shape of the metal sheet 3 before shearing was a press-formed article as illustrated in FIG. 9. Reference sign 8 in FIG. 9 indicates a trim line (a position to become a sheared end surface). As a representative portion including a forming strain before trimming on the trim line 8, 10 portions A to J (not illustrated) were set. By CAE analysis by FEM, a strain amount before post-trimming and a forming residual stress after trimming at each trimmed portion were calculated.

In this example, an assembly stress caused at the time when a press-formed article after shearing was assembled to another structure was taken as the forming residual stress (forming stress) after trimming. The assembly stress was calculated, and a resultant calculated value was used as the forming residual stress (forming stress) after trimming.

Results are shown in Table 3.

[Table 3]

| OK: No delayed fracture NG: With delayed fracture | | | |
|---|---|---|---|
| Representative portion | Strain amount at trimmed portion | Forming residual stress / MPa | Delayed fracture test result |
| A | 0.003 | 1010 | OK |
| B | 0.007 | 580 | OK |
| C | 0.012 | 1240 | NG |
| D | 0.02 | 250 | OK |
| E | -0.05 | 740 | OK |
| F | -0.13 | 1040 | NG |
| G | -0.18 | 300 | OK |
| H | -0.2 | 240 | OK |
| I | -0.25 | 650 | NG |

(continued)

| OK: No delayed fracture NG: With delayed fracture | | | |
|---|---|---|---|
| Representative portion | Strain amount at trimmed portion | Forming residual stress / MPa | Delayed fracture test result |
| J | -0.3 | 820 | NG |

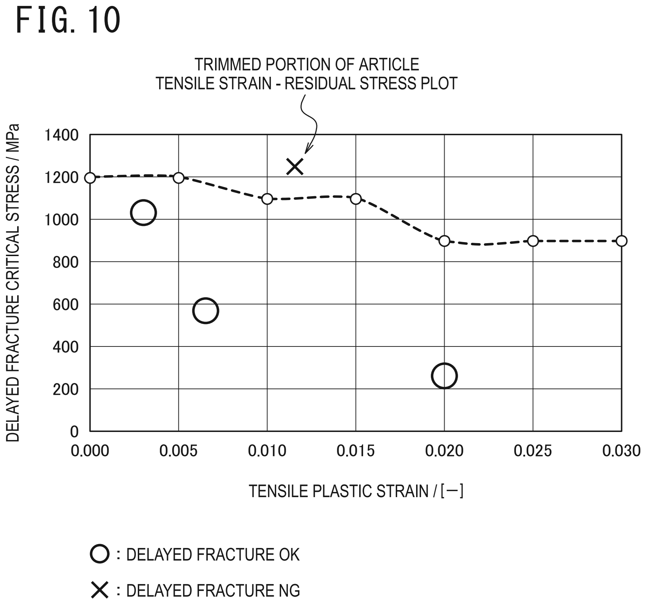

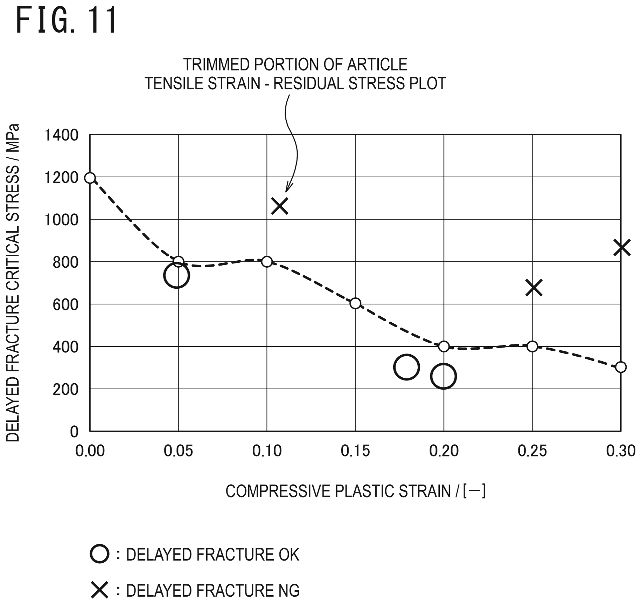

FIGS. 10, 11 illustrate the results in Table 3 put in FIGS. 7, 8 and plotted with a result of a delayed fracture test similar to the above test in terms of the article. Note that the compressive strain was changed to a positive value to correspond to the horizontal axis.

As can be seen from FIGS. 10, 11, it was found that delayed fracture in the post-trimmed portion of the press-formed article could be predicted accurately based on the present invention.

Furthermore, with reference to the prediction in FIGS. 10, 11, an article in which strain-stress was changed in a portion likely to have delayed fracture was prepared separately.

In FIGS. 10, 11, representative portions C, F, I, J are portions predicted to have a delayed fracture characteristic. That is, Table 4 is an example in a case of an article in which stress-strain was changed in the representative portions C, F, I, J. That is, Table 4 shows results of calculation of a strain amount before post-trimming and a forming residual stress after trimming by CAE analysis by FEM in terms of representative portions A to J in a modified article.

[Table 4]

| OK: No delayed fracture NG: With delayed fracture | | | |
|---|---|---|---|
| Representative portion | Strain amount at trimmed portion | Forming residual stress / MPa | Delayed fracture test result |
| A | 0.003 | 1010 | OK |
| B | 0.007 | 580 | OK |
| C | 0.01 | 820 | OK |
| D | 0.02 | 250 | OK |
| E | -0.05 | 740 | OK |
| F | -0.12 | 420 | OK |
| G | -0.18 | 300 | OK |
| H | -0.2 | 240 | OK |
| I | -0.24 | 110 | OK |
| J | -0.28 | 200 | OK |

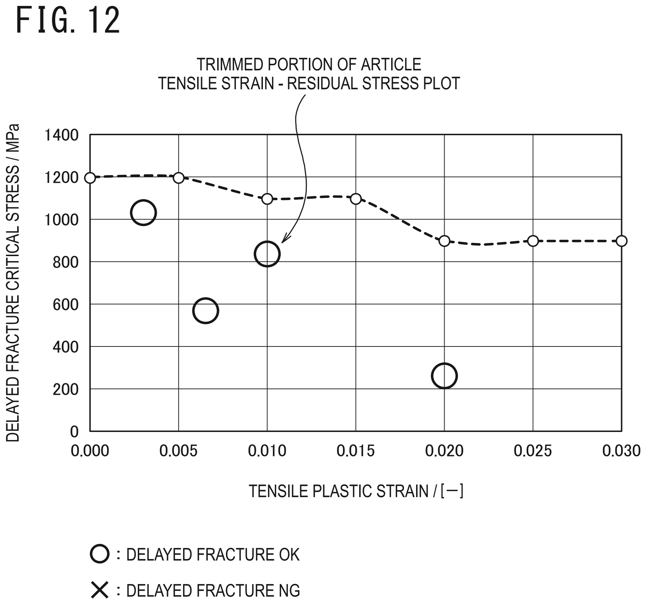

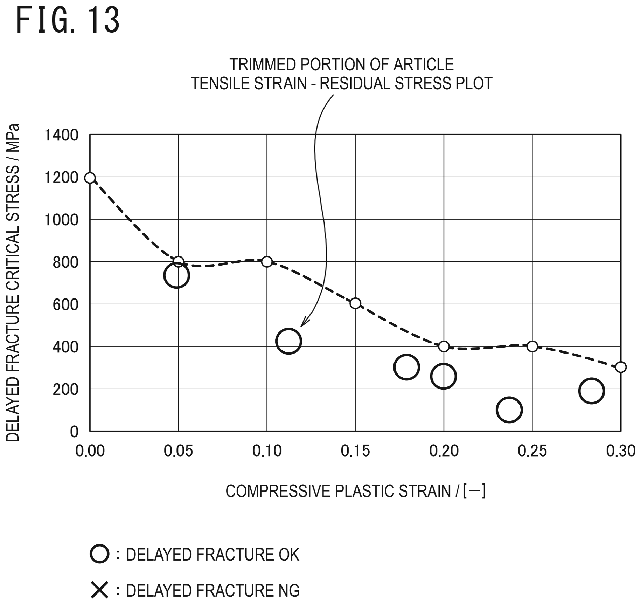

FIGS. 12, 13 illustrate the results in Table 4 put in FIGS. 7, 8 and plotted with a result of a delayed fracture test similar to described above in terms of the modified article. According to FIGS. 12, 13, delayed fracture in a post-trimmed portion of a press-formed article could be predicted accurately. Hereby, a press-formed article excellent in delayed fracture resistance can be produced based on this.

Here, in actual press working, a linear region frequently appears as a visible outline of a blank. In terms of this, in this disclosure, it is possible to evaluate the linear region by producing a test piece having the linear region including a sheared end surface extending linearly.

The linear region is different from a region where a sheared end surface is formed by punching a cylindrical region, for example. That is, at the time when a linear region is sheared to form a linear sheared end surface, the influence of a shearing angle or a clearance at the time of shearing is important in practice. In this disclosure, it is possible to perform the evaluation in consideration of the influence of a shearing angle or a clearance at the time of shearing.

For example, assume a case where a portion having a compressive plastic strain of 0.20 is subjected to post-trimming. In this case, as shown in Table 5, the influence of a shearing angle or a clearance can be measured.

[Table 5]

| | | Shearing angle / ° | | |
| --- | --- | --- | --- | --- |
| | | 0.0 | 0.5 | 1.0 |
| Punch-die clearance (Thickness%) | 12 | 400 | 300 | 300 |
| | 15 | 600 | 500 | 400 |
| | 20 | 700 | 600 | 500 |
| | 25 | 400 | 300 | 300 |

Table 5 shows a case where a shearing angle and a clearance at the time of shearing are set, and a critical stress is found to correspond to the shearing angle and the clearance. Note that the unit of the critical stress is MPa. Thus, in the linear region, the critical stress also varies depending on a shearing condition to form a sheared end surface.

Here, Japanese Patent Application No. 2023-072153 (filed on April 26, 2023) to which the present application claims priority is incorporated herein by reference in its entirety. Herein, the present invention has been described referring to a limited number of embodiments, but the scope of the present invention is not limited to them, and it is obvious for a person skilled in the art that the embodiments are modifiable based on the disclosure.

Reference Signs List

1: test piece
3: metal sheet
3A: drawn component
10A: first step
10B: second step
10C: third step
10D: fourth step
10E: fifth step
10F: sixth step
20: correlation information calculating unit
30: evaluation main unit
40: storage unit
40A: correlation information

**Claims**

1.  A delayed fracture characteristic evaluation method for evaluating a delayed fracture characteristic of a sheared end surface of a metal sheet made of a high-tensile steel sheet, the delayed fracture characteristic evaluation method comprising:

     producing a test piece having the sheared end surface from the metal sheet by applying a plastic strain to at least a portion of the metal sheet and performing shearing on the metal sheet at a position including the portion to which the plastic strain is applied;
     after the producing of the test piece, leaving the test piece under a hydrogen charging environment with a load stress being applied to the sheared end surface of the test piece; and
     evaluating the delayed fracture characteristic of the sheared end surface relative to the plastic strain.

2.  The delayed fracture characteristic evaluation method according to claim 1, wherein:

     the test piece includes a plurality of test pieces to which different plastic strains are applied before the shearing; and
     the delayed fracture characteristic of the metal sheet is evaluated for each of the different plastic strains.

3.  The delayed fracture characteristic evaluation method according to claim 1 or claim 2, further comprising:

finding, for a plastic strain amount before the shearing, a load-stress limit value under the hydrogen charging environment which load-stress limit value causes no delayed fracture on the sheared end surface after the shearing, wherein
the delayed fracture characteristic of the sheared end surface is evaluated based on the found load-stress limit value.

4. The delayed fracture characteristic evaluation method according to claim 3, further comprising:

finding, in advance, a correlation between the plastic strain amount before the shearing and the load-stress limit value; and
evaluating an allowable load stress relative to the plastic strain applied to the sheared end surface before the shearing based on the correlation.

5. A delayed fracture prediction method for predicting whether or not delayed fracture occurs in a press-formed article produced by shearing a pressed component having at least a portion to which a plastic strain is applied, at a position including the portion to which the plastic strain is applied, the delayed fracture prediction method comprising:

finding, in advance, a correlation between a plastic strain amount before the shearing and a load-stress limit value in terms of the metal sheet based on the delayed fracture characteristic evaluation method according to claim 3 or claim 4; and
predicting whether or not delayed fracture occurs in the press-formed article, based on the correlation.

6. A program causing:

a storage unit to store correlation information on a correlation between a plastic strain amount before shearing and a load-stress limit value which correlation is found based on the delayed fracture characteristic evaluation method according to claim 3 or claim 4; and
a computer to execute a process of finding, with reference to the correlation information thus stored, a load-stress limit value applicable after shearing which load-stress limit value corresponds to an input plastic strain amount before shearing.

7. A program for predicting whether or not delayed fracture occurs in a press-formed article produced by shearing a pressed component having at least a portion to which a plastic strain is applied, at a position including the portion to which the plastic strain is applied, the program causing:

a storage unit to store correlation information on a correlation between a plastic strain amount before shearing and a load-stress limit value which correlation is found based on the delayed fracture characteristic evaluation method according to claim 3 or claim 4; and
a computer to execute

a first processing step of finding, with reference to the correlation information thus stored, a load-stress limit value corresponding to an input plastic strain amount before shearing, and
a second processing step of determining whether or not delayed fracture occurs, based on a forming stress as a load stress applied, after the shearing, to a sheared end surface formed by the shearing performed on the pressed component and the load-stress limit value found in the first processing step.

8. A press-formed article producing method for producing a press-formed article having a sheared end surface formed by shearing at a position including a portion to which a plastic strain is applied, the press-formed article producing method comprising:

determining a condition of a load stress evaluated to cause no delayed fracture in the press-formed article, by the delayed fracture characteristic evaluation method according to claim 3 or claim 4; and
producing the press-formed article under a forming condition that satisfies the determined condition of the load stress.

# FIG. 1

FIRST STEP
APPLY PLASTIC STRAIN — 10A

↓

SECOND STEP
SHEARING STEP — 10B

↓

THIRD STEP — 10C

↓

FOURTH STEP
APPLY EXTERNAL STRESS — 10D

↓

FIFTH STEP
LEFT UNDER HYDROGEN
CHARGING ENVIRONMENT — 10E

↓

SIXTH STEP
EVALUATION — 10F

FIG. 2

TENSION

TENSION

# FIG. 3A

# FIG. 3B

DEEP DRAWING

COMPRESSIVE DEFORMATION

# FIG. 4

40

20

**S10**
INPUT MATERIAL TYPE OF EVALUATION TEST PIECE AND HYDROGEN ENVIRONMENT

40A

**S20**
INPUT APPLICATION CONDITION OF PLASTIC STRAIN

**S30**
INPUT EXPERIMENTAL DATA OF EXTERNAL LOAD LIMIT VALUE RELATIVE TO PLASTIC STRAIN AMOUNT

30

**S100**
INPUT MATERIAL TYPE OF TEST PIECE TARGETED FOR EVALUATION, SHEARING CONDITION, AND HYDROGEN ENVIRONMENT

**S40**
DERIVE FUNCTION f(x) OF EXTERNAL LOAD LIMIT VALUE d RELATIVE TO PLASTIC STRAIN AMOUNT x

**S110**
INPUT PLASTIC STRAIN AMOUNT x AND FORMING STRESS g

**S50**
DERIVE FUNCTION s · f(x) OF EXTERNAL LOAD LIMIT VALUE d IN CONSIDERATION OF SAFETY FACTOR AS s (0 < s ≦ 1)

REFER TO

**S120**
CALCULATE LOAD - STRESS LIMIT VALUE (d = s · f(x))

**S130**

RISK OF DELAYED FRACTURE ← No — $g \leqq s \cdot f(x)$ → OUTPUT

Yes

NO RISK OF DELAYED FRACTURE

# FIG. 5

TENSION

TENSION

50mm

250mm

FIG. 6A

FIG. 6B

200mm

3

5   50mm   5

200mm

3A

5       5

6

DEEP
DRAWING

50mm

COMPRESSIVE
DEFORMATION

1

FIG. 7

FIG. 8

FIG. 9

# FIG. 10

TRIMMED PORTION OF ARTICLE
TENSILE STRAIN - RESIDUAL STRESS PLOT

○ : DELAYED FRACTURE OK

✕ : DELAYED FRACTURE NG

# FIG. 11

TRIMMED PORTION OF ARTICLE
TENSILE STRAIN - RESIDUAL STRESS PLOT

○ : DELAYED FRACTURE OK

✕ : DELAYED FRACTURE NG

# FIG. 12

TRIMMED PORTION OF ARTICLE
TENSILE STRAIN - RESIDUAL STRESS PLOT

Y-axis: DELAYED FRACTURE CRITICAL STRESS / MPa (0, 200, 400, 600, 800, 1000, 1200, 1400)

X-axis: TENSILE PLASTIC STRAIN / [−] (0.000, 0.005, 0.010, 0.015, 0.020, 0.025, 0.030)

○ : DELAYED FRACTURE OK

✕ : DELAYED FRACTURE NG

# FIG. 13

TRIMMED PORTION OF ARTICLE
TENSILE STRAIN - RESIDUAL STRESS PLOT

○ : DELAYED FRACTURE OK

✕ : DELAYED FRACTURE NG

## INTERNATIONAL SEARCH REPORT

| International application No. |
|---|
| **PCT/JP2023/043466** |

| A. | CLASSIFICATION OF SUBJECT MATTER |
|---|---|

*G01N 3/24*(2006.01)i; *G01N 17/00*(2006.01)i
FI:   G01N3/24; G01N17/00

According to International Patent Classification (IPC) or to both national classification and IPC

| B. | FIELDS SEARCHED |
|---|---|

Minimum documentation searched (classification system followed by classification symbols)

G01N3/24; G01N17/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-014784 A (JFE STEEL CORP.) 20 January 2022 (2022-01-20) paragraphs [0005], [0017], [0026]-[0027], [0053] | 1-8 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **26 December 2023** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

28

## INTERNATIONAL SEARCH REPORT
### Information on patent family members

International application No.

**PCT/JP2023/043466**

| Patent document cited in search report | Publication date (day/month/year) | Patent family member(s) | Publication date (day/month/year) |
|---|---|---|---|
| JP 2022-014784 A | 20 January 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5196926 B
- JP 2022014784 A
- JP 2023072153 A